## Europäisches Patentamt

## European Patent Office

## Office européen des brevets

(19)

(11) Veröffentlichungsnummer: **0 029 904**
**B1**

(12) **EUROPÄISCHE PATENTSCHRIFT**

(45) Veröffentlichungstag der Patentschrift:
**28.09.83**

(51) Int. Cl.³: **F 16 L 21/02**

(21) Anmeldenummer: **80106281.1**

(22) Anmeldetag: **15.10.80**

(54) **Ringgedichtete Rohrsteckverbindung.**

(30) Priorität: **04.12.79 DE 2948736**

(43) Veröffentlichungstag der Anmeldung:
**10.06.81 Patentblatt 81/23**

(45) Bekanntmachung des Hinweises auf die Patenterteilung:
**28.09.83 Patentblatt 83/39**

(84) Benannte Vertragsstaaten:
**AT BE CH FR GB IT LI NL SE**

(56) Entgegenhaltungen:
**AU-B-417 049**
**CH-A-599 493**
**DE-C-1 055 460**
**DE-C-2 614 575**
**GB-A-1 165 431**
**US-A-3 064 983**

(73) Patentinhaber: **WOCO Franz-Josef Wolf & Co.,
Sprudelallee 19, D-6483 Bad Soden-Salmünster (DE)**

(72) Erfinder: **Wolf, Franz Josef, Sprudelallee 19, D-6483 Bad
Soden-Salmünster (DE)**
Erfinder: **Lauer, Hansjörg Dipl.-Ing., Marburger
Strasse 6, D-6483 Bad Soden-Salmünster (DE)**

(74) Vertreter: **Jaeger, Klaus, Dr.rer.nat. Dipl.-Chem. et al,
Jaeger, Grams & Pontani Patentanwälte
Bergstrasse 48 1/2, D-8035 München-Gauting (DE)**

## Ringgedichtete Rohrsteckverbindung

Die Erfindung betrifft eine ringgedichtete Rohrsteckverbindung der im Oberbegriff des Patentanspruchs 1 genannten Art.

Eine gattungsgemäße ringgedichtete Rohrsteckverbindung ist aus der US-A-3 064 983 bekannt. Der dabei verwendete Dichtungsring ist im wesentlichen ebenfalls gegen eine axiale Verschiebung in der entsprechenden Ringnut gesichert. Nachteilig ist jedoch, daß der bekannte Dichtungsring von der Konfiguration her trotzdem mehr einem Rollring entspricht, wodurch beim Einschieben des Spitzendes ein über die normal gewollte Drehung hinausgehendes Überdrehen möglich erscheint. Hierdurch würden dann die Dichtlippen gegen die Innenwand der Ringnut zu liegen kommen und der Fußbereich die Dichtung gegen das Spitzende bilden.

Dieses nachteilige Verhalten wird dadurch begünstigt, daß die Dichtlippen nur geringfügig über den fiktiven Kreis des Rollringes hinausragen. Des weiteren sind diese Dichtlippen etwa mit gleicher Materialstärke ausgebildet und weisen eine relativ schwache Materialverbindung mit dem torusförmigen Fußabschnitt auf, wodurch die für eine gute Dichtfunktion notwendigen Rückstellkräfte der Dichtlippen ungünstig beeinflußt werden.

Zudem ist der bekannte Dichtungsring beim Einsetzen in die Ringnut in seiner Ausrichtung nicht genau genug plazierbar, da die Komplementärflächen der Ringnut mit dem Dichtungsring nur klein sind und nur der Flächenbereich des Fußabschnitts zur genauen Anordnung dient. Bedingt durch diese Unsicherheit ist aber auch die axiale Ausrichtung der zur Muffenöffnung zeigenden Dichtlippe in Frage gestellt.

Der Erfindung liegt daher die Aufgabe zugrunde, eine Rohrsteckverbindung der eingangs genannten Art mit einem gegen axiale Verschiebung gesicherten Dichtungsring so zu schaffen, daß dieser präzise einsetzbar ist, wobei durch seine Konfiguration und Anordnung eine sichere Abdichtung bei allen Belastungszuständen, insbesondere gegenüber der Außenwand des Spitzendes gewährleistet ist, ohne daß höhere Einschubkräfte zum Einschieben des Spitzendes erforderlich sind.

Diese Aufgabe wird bei einer gattungsgemäßen Rohrsteckverbindung erfindungsgemäß durch die Merkmale des kennzeichnenden Teils des Anspruchs 1 gelöst.

Die Erfindung schafft daher eine Rohrsteckverbindung mit einem V-förmigen Dichtungsring, der sehr präzise in der Ringnut angeordnet werden kann. Durch diese zuverlässige und präzise Anordnung, die vor allen Dingen durch die radiale Vorspannung gegen die Sohle der Ringnut im Bereich der außenliegenden Flächen des Fußabschnittes und des vorderen Schenkels erreicht wird, ist auch sichergestellt, daß das eingeschobene Spitzende zunächst den axial weiter innen liegenden, radial stehenden Schenkel des Dichtungsringes berührt und dadurch den gesamten Dichtungsring zum Verschwenken bringt. Die V-förmige Konfiguration des Dichtungsringes stellt dabei sicher, daß ein Durchrollen des Dichtungsringes vermieden wird, wobei die Dichtlippen nicht zur Abdichtung gegenüber der Außenwand des Spitzendes gelangen. Im Zusammenwirken mit dem größeren lichten Innendurchmesser der radial innenliegenden Fläche des axial ausgerichteten Schenkels als dem lichten Innendurchmesser der Muffe und der V-Form des Dichtungsringes, wird das Einschieben des Spitzendes trotz zuverlässiger axialer Fixierung des Dichtungsringes auch ohne Erhöhung der erforderlichen Einschubkräfte ermöglicht. Aufgrund der präzisen Anordnung des Dichtungsringes in der Ringnut und seiner V-Konfiguration wird bei eingeschobenem Spitzende der Fußabschnitt des Dichtungsringes unvermindert stark auf die Sohle der Ringnut dichtend gepreßt.

Die beiden Schrägflächen der flach V-förmig ausgebildeten Ringnut in der Muffeninnenwand sind vorzugsweise durch zwei im wesentlichen radial angeordnete Kreisringflächen begrenzt. Diese Kreisringflächen haben vorzugsweise eine radiale Breite, die mindestens gleich, vorzugsweise geringfügig größer als die radiale Breite der angrenzenden Abschnitte der Ringlippen des V-förmigen Dichtungsringes ist. Mit anderen Worten, die in der Muffenwand ausgebildete Ringnut ist so tief, daß sie den entspannten V-förmigen Dichtungsring so aufnehmen kann, daß der zum Muffenausgang weisende horizontal liegende Schenkel oder die Ringlippe des V-förmigen Lippendichtungsringes bezüglich der Innenwandfläche der Muffe in der Ringnut versenkt liegt. Bei eingeschobenem Spitzende, also verschwenktem und gespreiztem Dichtungsring kann dieser vollständig und ohne nennenswerte Materialverpressung in der Kammer aufgenommen werden. Da der Außenmantel des Spitzendes bei hoher Scheitellast auf der Innenwand der Muffe tragend aufliegt, ohne daß die eigentliche Scherlast vom Dichtungsring aufgenommen und getragen zu werden braucht, kann die ringgedichtete Rohrsteckverbindung der Erfindung auch bei höchsten Scheitelscherlasten voll funktionsfähig dichten, und zwar ohne unverhältnismäßig große Materialmengen zur Herstellung des Dichtungsringes und ohne unvertretbar große Einschubkräfte für das Spitzende bei kleinen Dichtungsspalten in Kauf nehmen zu müssen. Selbst wenn diese Gelenkauskehlung vorzugsweise schwach hinterschnitten ist, kann durch das Tieflegen des Gelenkes kein Ausheben des Fußabschnittes des Dichtungsringes erfolgen. Es wird sogar vorteilhafterweise dadurch eine Verbesserung der Dichtung im Fußabschnitt erreicht.

Der Krümmungsradius des Fußabschnittes des V-förmigen Dichtungsringes bzw. der Auskehlung in der Sohle der Ringnut in der Innenwand der Muffe ist relativ groß gewählt, um eine möglichst große Gelenkfläche zu erhalten. Vorzugsweise entspricht der Durchmesser des Krümmungsradius des Profils des Fußabschnittes des Dichtungsringes zumindest ungefähr der Dicke des Dichtungsringprofils bzw. des Schnurprofils von der Spitze des durch die beiden Lippenschenkel des V-förmigen Dichtungsringes eingeschlossenen Winkels bis zur Oberfläche des radial außen gegenüberliegenden Fußabschnittes des Dichtungsringes, gemessen in Richtung der Winkelhalbierenden zwischen den beiden Schenkeln des V-förmigen Dichtungsringes.

Die beiden Lippenringschenkel des V-förmigen Dichtungsringes sind nach außen verjüngt ausgebildet, und zwar vorzugsweise in der Weise, daß dabei die als axial liegende, vorzugsweise zylindrisch ausgebildete radial innenliegende Fläche des zum Muffenausgang weisenden Schenkels und die radial liegende Kreisringfläche des in den Muffeninnenraum hineinragenden Schenkels des Dichtungsringes senkrecht aufeinander stehen. Die äußeren Enden dieser Lippen enden vorzugsweise stumpf in einer relativ breiten Stirnringfläche.

Bei einer solchen Ausbildung des V-förmigen Dichtungsringes für die Rohrsteckverbindung der Erfindung ist die in der Innenwand der Muffe ausgebildete Ringnut vorzugsweise so gegen die Muffenachse geneigt, daß bei anliegender radialer Außenfläche des zum Muffenausgang weisenden im wesentlichen horizontal liegenden Schenkels des Dichtungsringes die Innenfläche im wesentlichen konzentrisch zur Innenwandfläche der Muffe liegt, wobei sich diese Angaben auf den im wesentlichen entspannten Zustand des eingelegten Dichtungsringes vor dem Einschieben des Spitzendes beziehen. Der Fußabschnitt des Dichtungsringes liegt dann gelenkig bündig und verschwenkbar in der Auskehlung auf der Sohle der Muffe. Die zum Muffengrund weisende rückwärtige Schrägfläche der im wesentlichen flach V-förmig ausgebildeten Ringnut liegt vor dem Einschieben des Spitzendes vollkommen frei.

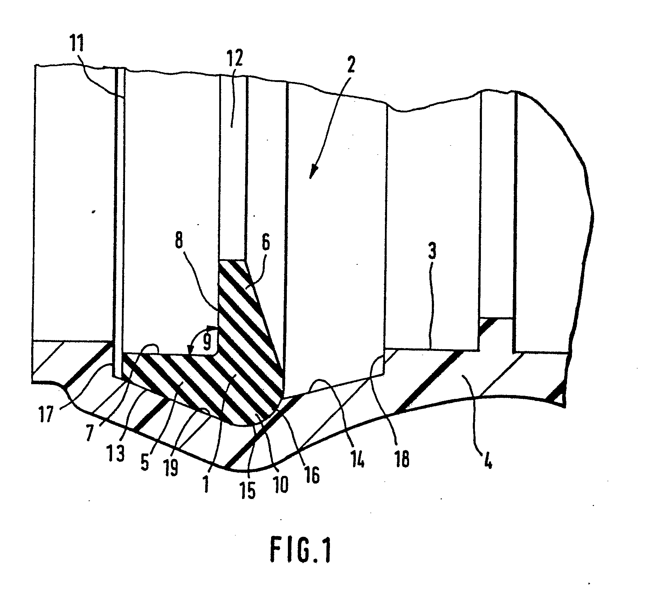

Die Erfindung ist im folgenden anhand eines Ausführungsbeispiels in Verbindung mit der Zeichnung näher erläutert. Es zeigt die einzige Fig. 1 ein Ausführungsbeispiel der ringgedichteten Rohrsteckverbindung im Axialschnitt und in Teildarstellung.

Die in der Fig. 1 gezeigte ringgedichtete Rohrsteckverbindung besteht aus einem V-förmigen Dichtungsring 1, der in einer im wesentlichen flach V-förmigen Ringnut 2 liegt, die in der Innenwand 3 einer Muffe 4 ausgebildet ist.

Die Muffe 4 besteht ebenso wie das Spitzende aus Kunststoff. Als Werkstoff für die miteinander zu verbindenden Rohrenden, nämlich das Spitzende (in der Fig. nicht dargestellt) und die Muffe 4 können ebenso mineralische Werkstoffe wie beispielsweise gebrannter Ton, Asbestzement oder Beton, oder Metall verwendet werden.

Der Dichtungsring 1 besteht aus einem elastischen Werkstoff, hier aus Kautschuk. Der Dichtungsring 1 weist im Axialschnitt ein im wesentlichen V-förmiges Schnurprofil auf. In dem in Beispiel 1 gezeigten im wesentlichen entspannten Zustand, in dem der Dichtungsring bestimmungsgemäß in die Ringnut 2 in der Innenwand 3 der Muffe 4 eingelegt ist, bevor das Spitzende in die Muffe zur Herstellung der Rohrsteckverbindung eingeschoben wird, liegt eine Ringlippe bzw. einer der beiden Schenkel 5 des V-förmigen Dichtungsringes, bezogen auf die Achse der Muffe 4, im wesentlichen axial (»Axialschenkel«), während der andere Lippenring oder Schenkel 6 im wesentlichen radial in den Muffeninnenraum hineinragt (»Radialschenkel«). Der lichte Durchmesser des Dichtungsringes, der durch den Radialschenkel 6 definiert wird, ist in jedem Fall deutlich kleiner als der im Toleranzbereich kleinstmögliche Außendurchmesser des zur Herstellung der Rohrsteckverbindung in die Muffe 4 einzuschiebenden Spitzendes. Der Axialschenkel 5 und der Radialschenkel 6 schließen zwischen ihrer radial innenliegenden zylindrischen Mantelfläche 7 und der im wesentlichen radial liegenden zum Muffenausgang weisenden Kreisringfläche 8 des Radialschenkels 6 einen rechten Winkel 9 ein. Dem eingeschlossenen Winkel 9 radial außen gegenüber ist am Dichtungsring 1 ein Fußabschnitt 10 ausgebildet. Der Fußabschnitt 10 ist mit einem relativ großen Krümmungsradius torusförmig kräftig und flach abgerundet. Der Krümmungsdurchmesser der Abrundung des Dichtungsringes 1 im Fußabschnitt 10 entspricht zumindest ungefähr dem Abstand zwischen der radial außenliegenden Begrenzungsfläche des Fußabschnitts 10 und der Spitze des von den beiden Schenkeln 5, 6 eingeschlossenen Winkels 9 in Richtung der Winkelhalbierenden des eingeschlossenen Winkels 9. Dieser Krümmungsdurchmesser ist vorzugsweise geringfügig größer als die tiefste Tiefe der Ringnut 2. Dadurch wird bei extrem großen Scheitelscherlasten die Auflage der Außenwand des Spitzendes auf der Innenwand 3 der Muffe 4 abgefedert, ohne daß durch eine solche Abfederung die zum Einschieben des Spitzendes erforderlichen Einschubkräfte spürbar erhöht werden.

Die beiden sich nach außen hin verjüngenden Schenkel 5, 6 des Dichtungsringes enden jeweils stumpf in einer relativ breiten Ringfläche. Die Ringfläche 11 des Axialschenkels 5 ist eine radial stehende ebene Kreisringfläche, während die Ringfläche 12 des Radialschenkels 6 eine axial ausgerichtete Zylinderringfläche ist.

Die in der im wesentlichen zylindrischen Innenwand 3 der Muffe 4 ausgebildete Ringnut 2 ist im wesentlichen flach V-förmig ausgebildet mit einer zum Muffenausgang weisenden Schrägfläche 13 und einer zum Muffengrund weisenden Schrägfläche 14. Im Bereich des radial tiefsten Punktes der Ringnut 2, also im Bereich des größten Durchmessers der Ringnut 2, ist zwischen den beiden Schrägflächen 13, 14 der Ringnut 2 eine Auskehlung 15 profilkomplementär zur Profilabrundung im Fußabschnitt 10 des Dichtungsringes 1 ausgebildet. Die näher am Muffengrund stehende »rückwärtige« Wandung der Hohlkehle 15 ist vorzugsweise etwas höher als die zum Muffenausgang weisende Wandung ausgebildet. Im Extremfall kann diese rückwärtige Wandung 16 der Auskehlung 15 sogar schwach hinterschnitten sein. Der mit relativ großem Krümmungsdurchmesser abgerundet ausgebildete Fußbereich 10 des V-förmigen Dichtungsringes 1 liegt wie ein ringförmiger Gelenkkopf in der Auskehlung 15, die nach Art einer ringförmigen Gelenkpfanne wirkt.

Die Schrägflächen 13, 14 der Ringnut 2 sind axial so lang bemessen, daß sie auch die gespreizten Schenkel des Dichtungsringes 1 bequem aufnehmen können. Auf ihrer zum Muffenausgang weisenden und ihrer zum Muffengrund weisenden Seite ist die Ringnut 2 durch radial stehende Kreisringflächen 17, 18 begrenzt. Die radial innenliegende Begrenzungskante dieser radialen Kreisringflächen 17, 18 ist durch die Innenwandfläche 3 der Muffe 4 definiert. Radial sind die Kreisringflächen 17, 18 so breit bemessen, daß sie geringfügig breiter als die angrenzenden Ringflächen 12 (bei eingeschobenem Spitzende und verschwenktem Radialschenkel 6) bzw. 11 sind. Dadurch ist gewährleistet, daß der Axialschenkel 5 des Dichtungsringes 1 vor dem Einschieben des Spitzendes mit seiner zylindrischen radial innenliegenden Innenfläche 7 vollständig in der Ringnut 2 versenkt ist. Mit anderen Worten, ist der lichte Durchmesser der Innenfläche 7 größer als der lichte Durchmesser der Innenfläche 3 der Muffe 4. Dies erleichtert das Einschieben des Spitzendes auch bei extrem kleinem Dichtspalt zwischen dem Außenmantel des Spitzendes und der Innenwand der Muffe. Außerdem führt diese Bemessung dazu, daß auch bei extrem hoher Scheitelscherlast diese Last nicht vom Dichtungsring 1, sondern im wesentlichen von der Innenwand 3 der Muffe 4 getragen wird. Auch extrem hohe Scheitelscherlasten verändern also nicht die Verformungsspannung des Dichtungsrings 1, die für die Dichtheit der ringgedichteten Rohrsteckverbindung ausschlaggebend ist. Die ringgedichtete Rohrsteckverbindung der Erfindung ist also in extrem hohem Maße unempfindlich gegenüber Scheitellasten und Scherlasten.

Die zum Muffenausgang weisende Schrägfläche 13 ist vorzugsweise gegenüber der Muffenachse in der Weise geneigt, daß beim flächigen Anliegen der radialen Außenfläche 19 des Axialschenkels 5 dessen Innenfläche 7 im wesentlichen axial ausgerichtet ist. Dabei liegt der ringförmige Gelenkkopf des Fußabschnittes 10 des Dichtungsringes 1 flächig und bündig in der Auskehlung 15 der Ringnut 2.

Beim Einschieben des Spitzendes in die mit dem Dichtungsring 1 bestückte Muffe 4 stößt zunächst die Stirnseite des Spitzendes an die zum Muffenausgang weisende Ringfläche 8 des Radialschenkels 6. Beim weiteren Einschieben des Spitzendes wird der Radialschenkel 6 zum Muffengrund hin verspannt und weggebogen. Dies führt zu einer Verschwenkung des Dichtungsringes 1 im Ringgelenk 10, 15. Die Schwenkbewegung ist also eine Verdrehung des Dichtungsringes 1 durch seine Hauptebene hindurch um eine kreisförmige Schwenklinie herum, die im Mittelpunkt des Krümmungskreises des Fußabschnittprofils liegt, und die sich beim Einschieben des Spitzendes in die Muffe 4 in der Muffe 4 axial nicht verschiebt.

Bei bestimmungsgemäß eingeschobenem Spitzende dichten die beiden Schenkel 5, 6 des Dichtungsringes 1 im wesentlichen symmetrisch gespreizt an der Außenmantelfläche des Spitzendes, während der Fußabschnitt 10 des Dichtungsringes 1 dichtend auf die Sohle der Nut 2, genauer radial auf die Sohle der Auskehlung 15 gepreßt wird. Ein Herausheben des Fußabschnitts 10 aus der Ringnut 2 ist ausgeschlossen.

## Patentansprüche

1. Ringgedichtete Rohrsteckverbindung

1.1. mit einem elastischen Dichtungsring (1), der zwei im wesentlichen V-förmig zueinander stehende Dichtlippen (5, 6) aufweist und der in einer in der Innenwand einer Muffe (4) ausgebildeten Ringnut (2) derart liegt, daß vor dem Einschieben des Spitzendes die eine (5) der beiden Dichtlippen mit ihrer radial innenliegenden Fläche (7) im wesentlichen axial ausgerichtet und dem Muffenausgang zugekehrt liegt, wobei der lichte Durchmesser der innenanliegenden Fläche (7) größer als der lichte Innendurchmesser der Muffe ist, während die andere Dichtlippe (6) im wesentlichen radial in den Muffeninnenraum hineinragt, und nach dem Durchschieben des Spitzendes durch den Dichtungsring (1) dieser mit seinen beiden Dichtlippen (5, 6) im wesentlichen symmetrisch und dichtend an der Außenwand des Spitzendes anliegt, während der dem von den beiden Dichtlippen (5, 6) des Dichtungsringes (1) eingeschlossenen Winkel radial außen gegenüberliegende Fußabschnitt des Dichtungsringes gelenkkopfartig torusförmig relativ flach abgerundet ausgebildet ist und dichtend auf der Sohle der Ringnut (2) liegt,

1.2. wobei die Ringnut (2) den gespreizten Dichtungsring (1) praktisch vollständig aufnehmen kann und im Bereich ihres größten Radius, also im Bereich ihrer tiefsten Stelle, eine gelenkpfannenartige, dem Fußabschnitt des Dichtungsringes profilkomplementär angepaßte Auskehlung (15) aufweist, die den Fußabschnitt des Dichtungsringes gegen axiale Verschiebung blockiert und gelenkig aufnimmt und mindestens am axial inneren Ende eine Stufe zur Innenwand der Muffe aufweist,

dadurch gekennzeichnet,

1.3. daß der gesamte Dichtungsring (1) mit V-förmigen Dichtlippen im wesentlichen einen V-förmigen Profilquerschnitt aufweist,

1.4. daß die beiden Dichtlippen als sich nach außen zu ihren Enden verjüngende Schenkel (5, 6) des Dichtungsringes (1) ausgebildet sind,

1.5. daß die Ringnut (2) die Form einer im wesentlichen flach V-förmigen Kammer hat, deren beide Schrägflächen (13, 14) axial geringfügig länger als die ihnen zugeordneten Schenkel (5, 6) des Dichtungsringes (1) sind und an beiden axialen Enden als Stufe radiale Kreisringflächen (17, 18) aufweisen, deren radial innenliegender Rand durch die zylindrische Innenwand (3) der Muffe (4) definiert ist, und

1.6. daß der Dichtungsring (1) im entspannten Zustand mit der radial außenliegenden Fläche des Fußabschnittes (10) und des Schenkels (5) unter höchstens geringer radialer Vorspannung auf der Sohle (13, 15) der Ringnut (2) aufliegt.

2. Rohrsteckverbindung nach Anspruch 1, dadurch gekennzeichnet, daß der Krümmungsdurchmesser des Profils des Fußabschnitts (10) des Dichtungsringes (1) im wesentlichen ungefähr gleich der Dicke des Profils des Dichtungsringes (1) in Richtung der Winkelhalbierenden zwischen den beiden Schenkeln (5, 6) des V-förmigen Dichtungsringes (1) ist.

3. Rohrsteckverbindung nach Anspruch 1 oder 2, dadurch gekennzeichnet, daß die zum Muffenausgang weisende Schrägfläche (13) der Ringnut (2) so gegen die Muffenachse geneigt ist, daß bei anliegender radialer Außenfläche (19) des Schenkels (5), dessen radiale Innenfläche (7) im wesentlichen konzentrisch zur zylindrischen Innenwand (3) der Muffe (4) liegt.

4. Rohrsteckverbindung nach einem der Ansprüche 1 bis 3, dadurch gekennzeichnet, daß die gelenkpfannenartige Auskehlung (15) in der Ringnut (2) auf der zum Muffengrund weisenden Seite (16) höher als auf der zum Muffeneingang weisenden Seite und schwach hinterschnitten ausgebildet ist.

5. Rohrsteckverbindung nach einem der Ansprüche 1 bis 4, dadurch gekennzeichnet, daß die beiden Schenkel (5, 6) des Dichtungsringes in einer relativ breiten Ringfläche (11, 12) stumpf enden.

6. Rohrsteckverbindung nach einem der Ansprüche 1 bis 5, dadurch gekennzeichnet, daß der von den beiden Schenkeln (5, 6) des V-förmigen Dichtungsringes (1) eingeschlossene Winkel (9) im wesentlichen 90° ist.

**Claims**

1. Ring-packed pipe spigot-and-socket connection comprising

1.1. an elastic packing ring (1) with two packing lips (5, 6), which are arranged essentially V-shaped to each other, said packing ring is located in an annular groove (2) provided in the inside wall of a socket (4) in such a way that prior to the insertion of the spigot end, the one (5) of the two packing lips has a radially inner surface (7) substantially axially aligned and turned towards the outlet of the socket, whereby the inner diameter of said inner surface (7) is larger than the clear inner diameter of the socket (4), whereas the other packing lip (6) extends substantially radially into the interior of the socket, and that after the spigot end has been pushed through the packing ring (1) the packing ring with its two packing lips (5, 6) lies against the external wall of the spigot end essentially symmetrically and in sealing fashion, whereas a foot segment of the packing ring lying opposite the angle defined by the two packing lips, in the radially outward direction, being formed toroidally in the manner of a ball of a ball-and-socket joint and relatively shallowly rounded off, and lying on the bottom of the annular groove in sealing manner,

1.2. whereby the annular groove (2) can substantially accommodate the packing ring (1) when spread out and has in the zone of its greatest radius, which means the region of its deepest point, a recess (15) in the manner of the socket of a ball-and-socket joint, whose profile has been formed in a complementary manner to the profile of the foot segment of the packing ring and which blocks the foot segment of the packing ring against axial displacement and accommodate it in a flexible manner and comprises at least at the axially inner end a stage towards the insidewall of the socket,

characterized in

1.3. that the whole elastic packing ring (1) with V-shaped packing lips has an essentially V-shaped cross section,

1.4. that both packing lips of the packing ring are formed as legs (5, 6), which taper in the outward direction towards their ends,

1.5. that the annular groove (2) has the shape of a substantially shallow V-shaped chamber having two slanted surfaces (13, 14), which are axially only slightly longer than the legs (5, 6) of the packing ring (1) associated with them respectively and as a stage on the axial ends of said surfaces a pair of radially circular ring surfaces (17, 18) whose radially inwardly extending edge is defined by the cylindrical inside wall (3) of the socket (4), and

1.6. that the packing ring (1) in the relaxed state rests with the radially external surface of the foot segment (10) and the leg (5) respectively on the bottom of the annular groove with, at the most, a slight radial initial stress.

2. Pipe connection according to claim 1, wherein the diameter of curvature of the profile of the foot segment (10) of the packing ring (1) is substantially approximately equal to the thickness of the profile of the packing ring (1) in the direction of a bisector of the angle between the two legs (5, 6) of the V-shaped packing ring (1).

3. Pipe connection according to claim 1 or 2, wherein the slope of the slanted surface (13) of the annular groove (2) pointing towards the outlet of the socket (4) is inclined towards the axis of the socket in such a way that when the radially external surface of the leg (5) lies against said slanted surface (13) of the annular groove, then the radially internal surface (7) of the leg (5) is located substantially concentrically with respect to the cylindrical inside wall (3) of the socket (4).

4. Pipe connection according to one of the claims 1 to 3, wherein said recess (15) provided in the annular groove (2) is formed higher on the side (16) pointing towards the base of the socket (4) than on the side pointing towards the inlet of the socket and is designed in a slightly undercut manner.

5. Pipe connection according to one of the claims 1 to 4, wherein both legs (5, 6) of the packing ring (1) end bluntly in a relatively wide annular surface (11, 12).

6. Pipe connection according to one of the claims 1 to 5, wherein the angle (9) enclosed by the two legs (5, 6) of the V-shaped packing ring (1) is substantially a 90° angle.

**Revendications**

1. Raccord par emboîtement de tuyaux à manchon avec anneau d'étanchéité comportant:

1.1. un joint d'étanchéité annulaire élastique (1) qui présente deux lèvres d'étanchéité (5, 6) reliées entre elles sous forme d'un »V« et qui est logé dans une rainure annulaire (2) pratiquée dans la paroi intérieure d'un manchon (4) de manière telle
— qu'avant l'introduction de l'extrémité mâle, l'une des deux lèvres d'étanchéité (5) soit dirigée par la face intérieure (7) en position radiale, dans le sens axial, c'est-à-dire vers l'ouverture du manchon, afin que le diamètre libre de la face intérieure (7) soit plus grand que le diamètre intérieur libre du manchon (4), alors que la deuxième lèvre d'étanchéité (6) pénètre en position essentiellement radiale à l'intérieur de la cavité du manchon;
— qu'après l'introduction de l'extrémité mâle dans le joint d'étanchéité annulaire (1) celui-ci s'applique par ses deux lèvres d'étanchéité (5, 6) et d'une manière étroite et symétrique contre la paroi extérieure de cette extrémité mâle,
— alors que la zone de base du joint d'étanchéité annulaire (1), qui dans le sens radial constitue la zone extérieure du sommet de l'angle formé par les deux lèvres d'étanchéité (5, 6) de ce joint d'étanchéité annulaire (1), présente la forme d'une tête articulée, torique, arrondie et relativement plane qui repose de manière à y assurer l'étanchéité sur la surface de base de la rainure circulaire (2),

1.2. ladite rainure circulaire (2) qui peut loger pratiquement la totalité du joint d'étanchéité annulaire en position écartée, présente dans la zone de son plus grand rayon, c'est-à-dire dans la zone la plus profonde, une gorge (15) qui épouse étroitement la forme de la zone de base du joint d'étanchéité (1) en la bloquant ainsi contre tout décalage axial et qui comporte au moins à son extrémité intérieure vu dans le sens axial, un palier reliant la paroi intérieure du manchon,

lequel raccord étant caractérisé:

1.3. en ce que le joint d'étanchéité annulaire (1) comporte des lèvres d'étanchéité en forme de »V« et présente une section transversale en forme de »V« également,

1.4. en ce que les deux lèvres d'étanchéité du joint d'étanchéité (1) présentent la forme d'ailes (5, 6) s'amincissant vers leur extrémité libre,

1.5. en ce que la rainure annulaire (2) présente dans ses grandes lignes la forme d'une cavité plane, en forme de »V«, dont les deux faces obliques (13, 14) sont légèrement plus longues que les ailes (5, 6) du joint d'étanchéité annulaire (1) qui leur sont respectivement coordonnées et comportent à leur extrémité axiale des paliers (17, 18) placés dans le sens radial, dont le bord intérieur dans le sens radial est constitué par la paroi cylindrique (3) intérieure du manchon (4) et

1.6. en ce qu'en position détendue le joint d'étanchéité annulaire (1) s'appuie par sa face extérieure de la zone de base (10), vue dans le sens radial, ainsi que par son aile (5) contre la surface de base (13, 15) de la rainure annulaire (2) sous une pré-contrainte radiale excessivement faible.

2. Raccord par emboîtement selon la revendication 1, caractérisé en ce que le diamètre de la courbure de la coupe transversale de la zone de base (10) du joint d'étanchéité annulaire (1) est approximativement égal à l'épaisseur de la coupe transversale du joint d'étanchéité (1) réalisée par la bissectrice de l'angle formé par les deux ailes (5, 6) de ce joint d'étanchéité annulaire en forme d »V« (1).

3. Raccord par emboîtement selon l'une quelconque des revendications 1 ou 2, caractérisé en ce que la face oblique (13) de la rainure annulaire (2) dirigée vers l'axe du manchon (4) s'incline vers cet axe de manière que sous l'effet de l'appui de la face radiale extérieure (19) de l'aile (5) sa face radiale intérieure (7) et la paroi cylindrique intérieure (3) du manchon (4) soient concentriques.

4. Raccord par emboîtement selon l'une quelconque des revendications 1 à 3, caractérisé en ce que la gorge (15) en forme de cavité articulaire pratiquée dans la rainure annulaire (2) est plus longue sur le côté dirigé vers le fond du manchon que sur le côté dirigé vers l'entrée du manchon et elle est légèrement détalonnée.

5. Raccord par emboîtement selon l'une quelconque des revendications 1 à 4, caractérisé en ce que les deux ailes (5, 6) du joint d'étanchéité annulaire présentent une forme tronquée dans un espace circulaire (11, 12) relativement large.

6. Raccord par emboîtement selon l'une quelconque des revendications 1 à 5, caractérisé en ce que l'angle (9) formé par les deux ailes (5, 6) du joint d'étanchéité annulaire en forme de »V« est pratiquement de 90°.

FIG.1